# EUROPEAN PATENT APPLICATION

(11) **EP 3 524 802 A1**
(43) Date of publication of application: **14.08.2019**
(21) Application number: 17859383.6
(22) Date of filing: 12.10.2017
(51) Int. Cl.: F02D 29/02, B60J 7/12

(54) **VEHICLE CONTROL DEVICE**

(30) Priority: 14.10.2016 JP 2016202749
(71) Applicant: Mazda Motor Corporation, Aki-gun Hiroshima 730-8670 (JP)
(72) Inventor: YASUTOMI, Ryohei, Aki-gun Hiroshima 730-8670 (JP); KIYAMA, Shohei, Aki-gun Hiroshima 730-8670 (JP); NAITO, Jun, Aki-gun Hiroshima 730-8670 (JP); TOMIYORI, Hidemasa, Aki-gun Hiroshima 730-8670 (JP); SHINOHARA, Miwa, Aki-gun Hiroshima 730-8670 (JP); TSUDA, Yuta, Aki-gun Hiroshima 730-8670 (JP); OKADA, Hisanobu, Aki-gun Hiroshima 730-8670 (JP)
(74) Representative: Müller-Boré & Partner Patentanwälte PartG mbB
(86) International application number: PCT/JP2017/037077
(87) International publication number: WO 2018/070497

(57) **Abstract**

A vehicle control system comprises: a roof opening-closing button (12) provided inside a passenger compartment of a vehicle and configured to accept opening and closing manipulations for a roof unit (4); and a control unit (25) configured to control an engine (2) and a roof actuator (10) of the roof unit, wherein the control unit is operable, when the roof opening-closing button accepts the opening manipulation for shifting the roof unit from a closed state to an opened state, in a situation where the roof unit is in the closed state, and the engine is in an idle-stop state, to control the engine such that the engine being in an idle-stop state is restarted, and control the roof actuator such that the roof unit being in the closed state is shifted to the opened state.

## Description

### TECHNICAL FIELD

The present invention relates to a vehicle control system, and more particularly to a vehicle control system for a vehicle equipped with: a roof unit configured to cover a top of a passenger compartment and to be selectively openable and closable; a driving device to perform opening-closing drive of the roof unit; and an engine capable of an idle-stop operation.

### BACKGROUND ART

Heretofore, there has been known a vehicle equipped with a roof unit configured to cover a top of a passenger compartment and to be selectively openable and closable (see, for example, the following Patent Document 1). The vehicle described in the Patent Document 1 is provided with an electric motor for driving an opening-closing mechanism of the roof unit, wherein the electric motor is operated according to an opening-closing manipulation of a passenger to selectively open and close the roof unit.

Further, an idle-stop technique for automatically stopping an engine of a vehicle in response to satisfaction of a given idle-stop condition has been recently employed to improve fuel economy of the vehicle, and it is studied to mount an engine capable of an idle-stop operation, on a vehicle equipped with the above openable-closable roof unit as well.

### CITATION LIST

### [Patent Document]

Patent Document 1: JP 2016-150587A

### SUMMARY OF INVENTION

### [Technical Problem]

Meanwhile, as one example of a usage mode of the vehicle equipped with the openable-closable roof unit as described in the Patent Document 1, a situation is conceivable in which a driver drives the vehicle while setting the roof unit in a closed state, in an urban area where there are many glances and a large amount of exhaust emissions from surrounding vehicles, and, after arriving in a suburb, shifts the roof unit to an opened state to enjoy exhilarating driving.

In this situation, when the vehicle arrives in an urban area, a driver performs a manipulation for shifting the roof unit to the opened state. Then, after the roof unit is set to the opened state, the driver can intend a rapid acceleration of the vehicle.

However, if an idle-stop state of the engine is maintained during drive of the roof unit from the closed state to the opened state, the engine has to be first restarted when the driver intends to accelerate the vehicle after completion of the drive of the roof unit, so that there is a possibility of failing to sufficiently meet the expectation of the driver who intends a rapid acceleration of the vehicle.

The present invention has been made to solve such a problem, and an object thereof is to provide a vehicle control system for a vehicle equipped with an openable-closable roof unit and an engine capable of an idle-stop operation, wherein the vehicle control system is capable of controlling the roof unit and the engine while reflecting driver's intention.

### [Solution to Technical Problem]

In order to achieve the above object, according to a first aspect of the present invention, there is provided a vehicle control system for a vehicle equipped with: a roof unit configured to cover a top of a passenger compartment and to be selectively openable and closable; a driving device to perform opening-closing drive of the roof unit; and an engine capable of an idle-stop operation. The vehicle control system comprises: an opening-closing manipulator provided inside the passenger compartment and configured to accept opening and closing manipulations for the roof unit; and a controller configured to control the engine and the driving device, wherein the controller is operable, when the opening-closing manipulator accepts the opening manipulation for shifting the roof unit from a closed state to an opened state, in a situation where the roof unit is in the closed state, and the engine is in an idle-stop state, to control the engine such that the engine being in the idle-stop state is restarted, and control the driving device such that the roof unit being in the closed state is shifted to the opened state.

In the vehicle control system according the first aspect of the present invention having the above feature, the controller is operable, when the opening-closing manipulator accepts the opening manipulation for shifting the roof unit from the closed state to the opened state, in the situation where the roof unit is in the closed state and the engine is in the idle-stop state, to control the engine such that the engine being in the idle-stop state is restarted, and controls the driving device such that the roof unit being in the closed state is shifted to the opened state. Thus, when, in the situation where the engine is in the idle-stop state, a driver performs the opening manipulation for the roof unit so as to enjoy exhilarating driving under the condition that the roof unit is in the opened state, the engine can be restarted in response to the opening manipulation, and then when, after the roof unit is consequently set to the opened state, the driver depresses an accelerator pedal with intention of a rapid acceleration of the vehicle, an engine speed of the engine can be rapidly increased in response to the manipulation of the accelerator pedal by the driver. That is, it is possible to meet the expectation of the driver who intends a rapid acceleration of the vehicle.

Preferably, in the vehicle control system according the first aspect of the present invention, the controller is operable, when the opening-closing manipulator accepts the opening manipulation, in a situation where the roof unit is in the closed state, and the engine and the vehicle are, respectively, in the idle-stop state and in a stopped state, to control the engine such that the engine being in the idle-stop state is restarted, and control the driving device such that the roof unit being in the closed state is shifted to the opened state.

According to this feature, particularly when the driver performs the opening manipulation for the roof unit, in the situation where the engine and the vehicle are, respectively, in the idle-stop state and in the stopped state, the engine can be restarted in response to the opening manipulation, and then when, after the roof unit is consequently set to the opened state, the driver depresses the accelerator pedal with intention of a rapid acceleration of the vehicle from the stopped state, the engine speed can be rapidly increased in response to the manipulation of the accelerator pedal by the driver. That is, it is possible to more reliably meet the expectation of the driver who intends a rapid acceleration of the vehicle.

Preferably, in the vehicle control system according the first aspect of the present invention, the controller is operable to control the driving device such that the drive of the roof unit is started after the restart of the engine.

According to this feature, when, in the situation where the engine is in the idle-stop state, the driver performs the opening manipulation for the roof unit so as to enjoy exhilarating driving under the condition that the roof unit is in the opened state, the engine is first restarted in response to the opening manipulation, and subsequently the roof unit is driven. This makes it possible to produce a vehicle response fulfilling the expectation of the driver who intends a rapid acceleration of the vehicle.

According to a second aspect of the present invention, there is provided a vehicle control system for a vehicle equipped with: a roof unit configured to cover a top of a passenger compartment and to be selectively openable and closable; a driving device to perform opening-closing drive of the roof unit; and an engine capable of an idle-stop operation. The vehicle control system comprises: an opening-closing manipulator provided inside the passenger compartment and configured to accept opening and closing manipulations for the roof unit; and a controller configured to control the engine and the driving device, wherein the controller is operable, when the opening and closing manipulator accepts the opening manipulation for shifting the roof unit from a closed state to an opened state, in a situation where the roof unit is in the closed state, and the engine is in an operating state, to control the driving device such that the roof unit being in the closed state is shifted to the opened state, and inhibit the idle-stop operation of the engine, during a period during which the driving device drives the roof unit toward the opened state after the opening-closing manipulator accepts the opening manipulation.

In the vehicle control system according the second aspect of the present invention having the above feature, the controller is operable, when the opening-closing manipulator accepts the opening manipulation for shifting the roof unit from the closed state to the opened state, in the situation where the roof unit is in the closed state and the engine is in the operating state, to control the driving device such that the roof unit being in the closed state is shifted to the opened state, and inhibit the idle-stop operation of the engine, during the period during which the driving device drives the roof unit toward the opened state after the opening-closing manipulator accepts the opening manipulation. Thus, when, in the situation where the engine is in the operating state, a driver performs the opening manipulation for the roof unit so as to enjoy exhilarating driving under the condition that the roof unit is in the opened state, the idle-stop operation can be inhibited to maintain the operating state of the engine, and then when, after the roof unit is consequently set to the opened state, the driver depresses an accelerator pedal with intention of a rapid acceleration of the vehicle, an engine speed of the engine can be rapidly increased in response to the manipulation of the accelerator pedal by the driver. That is, it is possible to meet the expectation of the driver who intends a rapid acceleration of the vehicle.

Preferably, in the vehicle control system according the second aspect of the present invention, the controller is operable, when a vehicle speed of the vehicle is equal to or less than a first vehicle speed, to permit the opening-closing drive of the roof unit by the driving device, and, when the vehicle speed is equal to or less than a second vehicle speed less than the first vehicle speed, to permit the idle-stop operation of the engine.

In this case, in the conventional vehicle control system, there is a possibility that, when the vehicle speed becomes equal to or less than the first vehicle speed, the drive of the roof unit is started, and, when the vehicle speed becomes equal to or less than the second vehicle speed, the idle-stop operation of the engine is permitted. However, in the vehicle control system according the second aspect of the present invention, the controller operates to inhibit the idle-stop operation of the engine during the period during which the driving device drives the roof unit toward the opened state after the opening-closing manipulator accepts the opening manipulation. Thus, when, in the situation where the engine is in the operating state, the driver performs the opening manipulation for the roof unit so as to enjoy exhilarating driving under the condition that the roof unit is in the opened state, the idle-stop operation can be inhibited to maintain the operating state of the engine, and then when, after the roof unit is consequently set to the opened state, the driver depresses the accelerator pedal with intention of a rapid acceleration of the vehicle, the engine speed can be rapidly increased in response to the manipulation of the accelerator pedal by the driver.

Preferably, in the vehicle control system according the second aspect of the present invention, a drive time period required for the driving device to shift the roof unit from the closed state to the opened state is greater than a time period required for shifting the engine being in the operating state to the idle-stop state.

In this case, in the conventional vehicle control system, there is a possibility that the idle-stop operation of the engine is started in the middle of the drive of the roof unit from the closed state to the opened state. However, in the vehicle control system according the second aspect of the present invention, the idle-stop operation of the engine is inhibited during the period during which the driving device drives the roof unit toward the opened state after the opening-closing manipulator accepts the opening manipulation. Thus, when, in the situation where the engine is in the operating state, the driver performs the opening manipulation for the roof unit so as to enjoy exhilarating driving under the condition that the roof unit is in the opened state, the idle-stop operation can be inhibited to maintain the operating state of the engine, and then when, after the roof unit is consequently set to the opened state, the driver depresses the accelerator pedal with intention of a rapid acceleration of the vehicle, the engine speed can be rapidly increased in response to the manipulation of the accelerator pedal by the driver.

### [Effect of Invention]

The present invention can provide a vehicle control system for a vehicle equipped with an openable-closable roof unit and an engine capable of an idle-stop operation, wherein the vehicle control system is capable of controlling the roof unit and the engine while reflecting driver's intention.

### BRIEF DESCRIPTION OF DRAWINGS

FIG. 1 is a schematic diagram depicting the entire configuration of a vehicle equipped with a vehicle control system according to one embodiment of the present invention.
FIG. 2 is a block diagram depicting an electrical configuration of the vehicle control system according to this embodiment.
FIG. 3 is a flowchart of a processing routine for causing the vehicle control system according to this embodiment to control an engine and a roof actuator of a roof unit.
FIG. 4 is a flowchart of a processing routine for causing the vehicle control system according to this embodiment to control the engine and the roof actuator.
FIG. 5 is a time chart depicting operations of the engine and the roof unit when the vehicle control system according to this embodiment controls the engine and the roof actuator.
FIG. 6 is a time chart depicting operations of the engine and the roof unit when the vehicle control system according to this embodiment controls the engine and the roof actuator.
FIG. 7 is a flowchart of a processing routine for causing a vehicle control system according to a modification of this embodiment to control the engine and the roof actuator.
FIG. 8 is a flowchart of a processing routine for causing the vehicle control system according to the modification of this embodiment to control the engine and the roof actuator.

### DESCRIPTION OF EMBODIMENTS

With reference to the accompanying drawings, a vehicle control system according to one embodiment of the present invention will now be described.

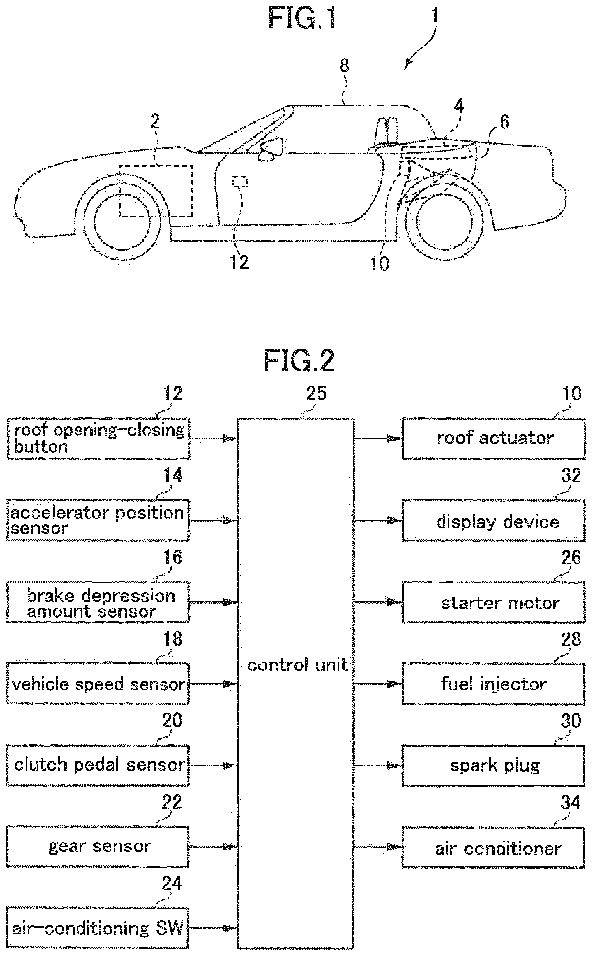

First of all, a vehicle equipped with the vehicle control system according to this embodiment will be described with reference to FIG. 1. FIG. 1 is a schematic diagram depicting the entire configuration of the vehicle equipped with the vehicle control system according to this embodiment.

In FIG. 1, the reference sign 1 denotes the vehicle equipped with the vehicle control system according to this embodiment. The vehicle 1 is equipped with an engine 2 mounted on a front part of a vehicle body thereof. The engine 2 is an internal combustion engine such as a gasoline engine or a diesel engine.

The vehicle 1 is also equipped with a roof unit 4 configured to cover a top of a passenger compartment and to be selectively openable and closable, and a roof storage compartment 6 for storing therein the roof unit 4 in an opened state. In FIG. 1, the roof unit 4 in the opened state is indicated by the broken line, and the roof unit 4 in a closed state is indicated by the one-dot chain line.

The roof unit 4 comprises a foldable roof (canvas top) 8, and a non-depicted link mechanism coupled to a rear part of the vehicle body and supporting the roof 8 in an openable-closable (foldable-unfoldable) manner. In the closed state, the roof 8 is unfolded or extended by the link mechanism to cover the top of the passenger compartment from therebehind. On the other hand, in the opened state, the roof 8 is folded by the link mechanism and retracted in the roof storage compartment 6. The link mechanism is configured to be driven by a roof actuator 10 (driving device) provided in the rear part of the vehicle body. As a drive source for the roof actuator 10, it is possible to use, e.g., a motor or an oil-hydraulic piston.

Further, the vehicle 1 is equipped with a roof opening-closing button 12 (opening-closing manipulator) provided inside the passenger compartment at a position allowing the roof opening-closing button 12 to be manipulated by a driver and configured to accept opening and closing manipulations for the roof unit 4. The roof opening-closing button 12 is operable, in response to accepting a manual input, i.e., one of the opening and closing manipulation, to output a detection value corresponding to the manual input to the after-mentioned control unit 25.

Next, an electrical configuration of the vehicle control system according to this embodiment will be described with reference to FIG. 2. FIG. 2 is a block diagram depicting the electrical configuration of the vehicle control system according to this embodiment.

The vehicle 1 is further equipped with: an accelerator position sensor 14 operable to detect a relative position of an accelerator pedal (relative accelerator position); a brake depression amount sensor 16 operable to detect the amount of depression of a brake pedal; a vehicle speed sensor 18 operable to detect a vehicle speed of the vehicle 1; a clutch pedal sensor 20 operable to detect manipulation of a clutch pedal; a gear sensor 22 operable to detect a gear stage of a transmission; and an air-conditioning switch 24 operable to accept a manual input with respect to an air conditioner 34. Each of the sensors and the switch is operable to output a detection value thereof to a control unit 25.

The control unit 25 is composed of a computer which comprises a CPU, a memory storing therein various programs, and an input-output device. The control unit 25 is operable, based on signals input from the above sensors and switch, to control the roof actuator 10, various components (a starter motor 26, a fuel injector 28, a spark plug 30, etc.), of the engine 2, a display device 32 provided inside the vehicle compartment, and the air conditioner 34.

The control unit 25 is equivalent to a part of "vehicle control system" as set forth in the appended claims, and functions as "controller" as set forth in the appended claims.

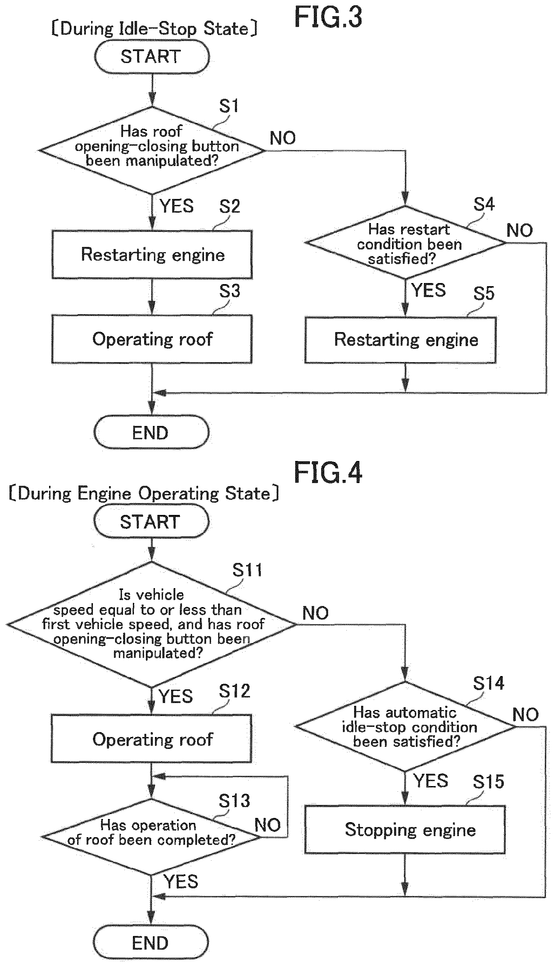

Next, with reference to FIGS. 3 and 4, an engine control processing routine to be executed by the vehicle control system according to this embodiment will be described.

FIG. 3 is a flowchart of a processing routine for causing the vehicle control system to control the roof actuator 10 and the engine 2 in a situation where the engine 2 is in an idle-stop state, and the vehicle 1 is in a stopped state, and FIG. 4 is a flowchart of a processing routine for causing the vehicle control system to control the roof actuator 10 and the engine 2 in a situation where the engine 2 is in an operating state. That is, after an ignition switch of the vehicle 1 is turned on, and electric power is applied to the vehicle control system, the processing routine in FIG. 3 is repeatedly executed during the idle-stop state of the engine 2, and the processing routine in FIG. 4 is repeatedly executed during the operating state of the engine 2.

Firstly, as depicted in FIG. 3, upon start of the processing routine to control the roof actuator 10 and the engine 2 in the situation where the vehicle 1 is in the stopped state and the engine 2 is in the idle-stop state, in step S1, the control unit 25 operates to determine whether or not the roof opening-closing button 12 has accepted one of the opening and closing manipulations for the roof unit 4.

As a result, when the roof opening-closing button 12 is determined to have accepted one of the opening and closing manipulations for the roof unit 4, the processing routine proceeds to step S2 in which the control unit 25 operates to control the engine 2 such that the engine 2 being in the idle-stop state is restarted. For example, the control unit 25 operates to activate the starter motor 26 to crank the engine 2 and to activate the fuel injector 28 at a given timing to inject a given amount of fuel into a cylinder of the engine 2, and cause the spark plug 30 to spark at a given timing to ignite an air-fuel mixture in the cylinder, thereby restarting the engine 2.

Subsequently, the processing routine proceeds to step S3 in which the control unit 25 operates to operate the roof actuator 10 such that the roof unit 4 is driven from the closed state to the opened state, or from the opened state to the closed state, depending on one of the opening and closing manipulations accepted by the roof opening-closing button 12 in the step S1. After completion of the operation of the roof actuator 10, the processing of the control unit 25 is terminated.

On the other hand, in the step S1, when the roof opening-closing button 12 is determined not to have accepted any of the opening and closing manipulations for the roof unit 4, the processing routine proceeds to step S4 in which the control unit 25 operates to determine whether or not a restart condition for restarting the engine 2 being in the idle-stop state has been satisfied.

For example, the control unit 25 may be configured to acquire a depressed state of the clutch pedal based on a signal input from the clutch pedal sensor 20. In this case, in response to detecting that the clutch pedal has been depressed, the control unit 25 operates to determine that the restart condition has been satisfied.

As a result of the determination in the step S4, when the restart condition is determined to have been satisfied, the processing routine proceeds to step S5 in which the control unit 25 operates to control the engine 2 such that the engine 2 being in the idle-stop state is restarted. After restart of the engine 2, or, in the step S4, when the restart condition is determined not to have been satisfied, the processing of the control unit 25 is terminated.

Secondly, as depicted in FIG. 4, upon start of the processing routine to control the roof actuator 10 and the engine 2 in the situation where the engine 2 is in the operating state, in step S11, the control unit 25 operates to determine whether or not the vehicle speed is equal to or less than a first vehicle speed (e.g., 5 to 20 km/h) which is an upper limit of a vehicle speed range in which opening-closing drive of the roof unit 4 is permitted, and the roof opening-closing button 12 has accepted one of the opening and closing manipulations for the roof unit 4.

As a result, when it is determined that the vehicle speed is equal to or less than the first vehicle speed, and the roof opening-closing button 12 has accepted one of the opening and closing manipulations for the roof unit 4, the processing routine proceeds to step S12 in which the control unit 25 operates to operate the roof actuator 10 such that the roof unit 4 is driven from the closed state to the opened state, or from the opened state to the closed state, depending on one of the opening and closing manipulations accepted by the roof opening-closing button 12 in the step S11.

Subsequently, in step S13, the control unit 25 operates to determine whether or not the operation of the roof actuator has been completed. As a result, when the operation of the roof actuator 10 is determined not to have been completed, the control unit 25 operates to wait until the operation of the roof actuator 10 is completed. Then, after completion of the operation of the roof actuator 10, the processing of the control unit 25 is terminated.

On the other hand, in the step S11, when it is determined that the vehicle speed is not equal to or less than the first vehicle speed (is greater than the first vehicle speed), or the roof opening-closing button 12 has not accepted any of the opening and closing manipulations for the roof unit 4, the processing routine proceeds to step S14 in which the control unit 25 operates to determine whether or not an automatic idle-stop condition for automatically shifting the engine 2 being in the operating state to the idle-stop state has been satisfied.

For example, when: the vehicle speed detected by the vehicle speed sensor 18 is equal to or less than a second vehicle speed (e.g., 3 to 5 km/h) less than the first vehicle speed; the relative accelerator position detected by the accelerator position sensor 14 is equal to or less than 3%; the gear stage detected by the gear sensor 22 is a neutral stage; and a clutch stroke (depressed state) detected the clutch pedal sensor 20 is less than 20%, the control unit 25 operates to determine that the automatic idle-stop condition has been satisfied.

As a result of the determination in the step S14, the automatic idle-stop condition is determined to have been satisfied, the processing routine proceeds to step S15 in which the control unit 25 operates to control the engine 2 such that the engine 2 being in the operating state is shifted to the idle-stop state. After shifting the engine 2 to the idle-stop state, or, in the step S14, when the automatic idle-stop condition is determined not to have been satisfied, the processing of the control unit 25 is terminated.

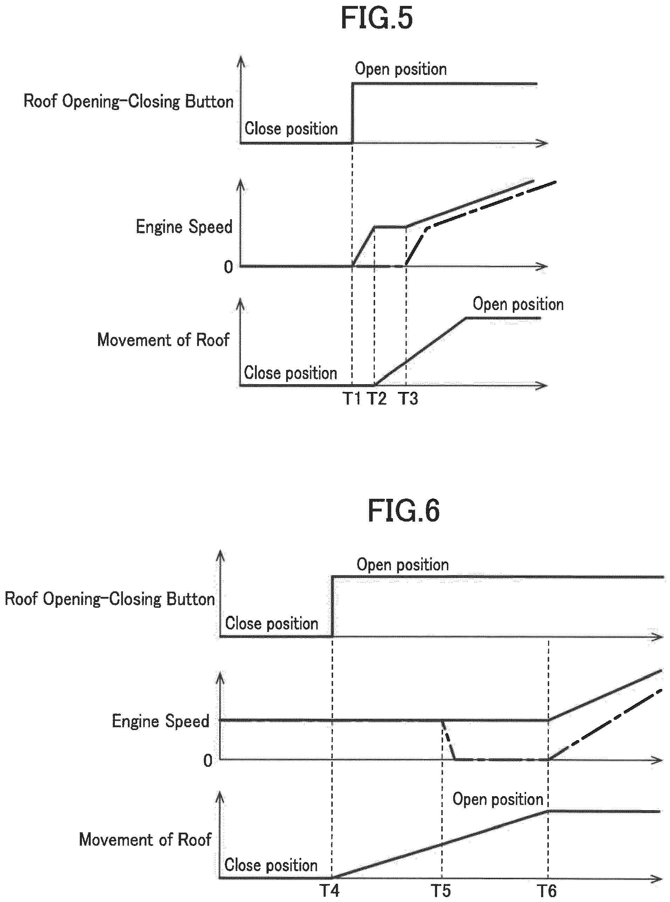

Next, respective operations of the engine 2 and the roof unit 4 when the vehicle control system according to this embodiment controls the engine 2 and the roof actuator 10 will be described with reference to FIGS. 5 and 6. FIG. 5 is a time chart depicting respective operations of the engine 2 and the roof unit 4 when the vehicle control system controls the engine 2 and the roof actuator 10 in the situation where the vehicle 1 is in the stopped state and the engine 2 is in the idle-stop state, and FIG. 6 is a time chart depicting respective operations of the engine 2 and the roof unit 4 when the vehicle control system according to this embodiment controls the engine 2 and the roof actuator 10 in the situation where the engine 2 is in the operating state.

As depicted in FIG. 5, when the roof opening-closing button 12 accepts, at time T1, the opening manipulation for shifting the roof unit 4 from the closed state to the opened state, in the situation where the vehicle 1 is in the stopped state and the engine 2 is in the idle-stop state, the control unit 25 operates to control the engine 2 such that the engine 2 being in the idle-stop state is restarted.

When the engine speed of the restarted engine 2 reaches an idle speed at time T2, the control unit 25 operates to operate the roof actuator 10 such that the roof unit 4 is driven from the closed state to the opened state, according to the opening manipulation accepted by the roof opening-closing button 12.

Subsequently, when a driver depresses the accelerator pedal at time T3 to accelerate the vehicle 1, the engine speed is rapidly increased along with an increase in the relative accelerator position, because the engine 2 has already been restarted and the engine speed thereof has reached the idle speed. That is, it is possible to meet the expectation of the driver who intends a rapid acceleration of the vehicle 1.

On the other hand, differently from the vehicle control system according to this embodiment, if the control unit 25 does not operate to restart the engine 2 being in the idle-stop state, when the roof opening-closing button 12 accepts the opening manipulation, the engine 2 is maintained in the idle-stop state until the restart condition is satisfied at the time T3, as indicated by the one-dot chain line in FIG. 5. Thus, when a driver depresses the accelerator pedal at the time T3 to accelerate the vehicle 1, the engine 2 being in the idle-stop state has to be first restarted, so that it is impossible to sufficiently meet the expectation of the driver who intends a rapid acceleration of the vehicle.

Further, as depicted in FIG. 6, when the roof opening-closing button 12 accepts, at time T4, the opening manipulation for shifting the roof unit 4 from the closed state to the opened state, in the situation where the engine 2 is in the operating state, the control unit 25 operates to operate the roof actuator 10 such that the roof unit 4 is driven from the closed state to the opened state, according to the opening manipulation accepted by the roof opening-closing button 12.

A time period required for the roof actuator 10 to shift the roof unit 4 from the closed state to the opened state is about 10 to 20 seconds, which is greater than a time period (less than one second) required for shifting the engine 2 being in the operating state to the idle-stop state. Thus, in the conventional vehicle control system, when the automatic idle-stop condition for automatically shifting the engine 2 to the idle-stop state is satisfied in the middle of movement of the roof unit 4, the engine 2 is likely to be shifted to the idle-stop state in the middle of the movement of the roof unit 4.

However, in the vehicle control system according to this embodiment, the determination as to whether or not the automatic idle-stop condition for automatically shifting the engine 2 to the idle-stop state has been satisfied is not performed during a period during which the roof actuator 10 drives the roof unit 4 toward the opened state after the roof opening-closing button 12 accepts the opening manipulation (see FIG. 4), so that, even if the automatic idle-stop condition is satisfied at, e.g., time T5, an idle-stop operation of the engine 2 is inhibited.

Subsequently, when the driver depresses, at time T6, the accelerator pedal to accelerate the vehicle 1, the engine speed is rapidly increased along with an increase in the relative accelerator position, because the idle-stop operation of the engine 2 is inhibited to maintain the idle speed. That is, it is possible to meet the expectation of the driver who intends a rapid acceleration of the vehicle 1.

On the other hand, differently from the vehicle control system according to this embodiment, if the control unit 25 does not operate to inhibit the engine 2 being in the operating state from being shifted to the idle-stop state, when the roof opening-closing button 12 accepts the opening manipulation, the control unit 25 operates to shift the engine 2 to the idle-stop state when the automatic idle-stop condition is satisfied at, e.g., the time T5, as indicated by the one-dot chain line in FIG. 6. Thus, when a driver depresses the accelerator pedal at time T6 to accelerate the vehicle 1, the engine 2 being in the idle-stop state has to be first restarted, so that it is impossible to sufficiently meet the expectation of the driver who intends a rapid acceleration of the vehicle.

Next, a vehicle control system according to a modification of the above embodiment will be described.

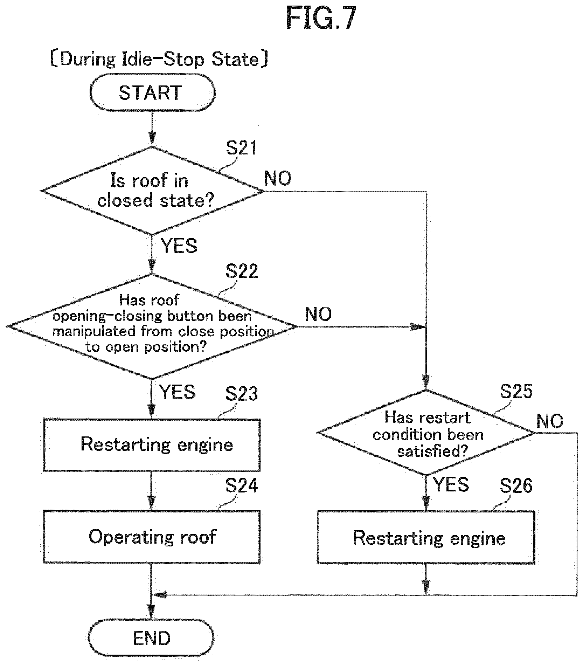

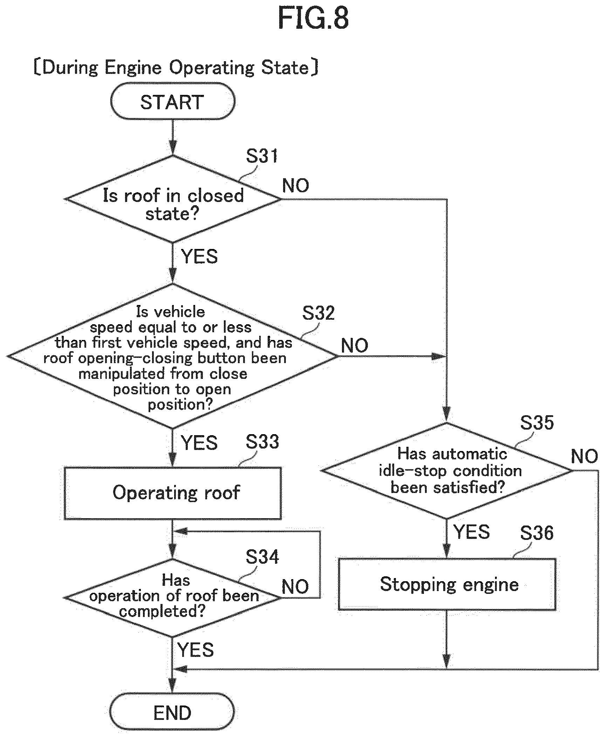

The above embodiment has been described based on one example in which, when the roof opening-closing button 12 accepts one of the opening and closing manipulations for the roof unit 4, the control unit 25 operates to restart the engine 2 or inhibit the idle-stop operation of the engine 2, and cause the roof actuator 10 to drive the roof unit 4, as depicted in FIGS. 3 and 4. Alternatively, as depicted in FIGS. 7 and 8, the control unit 25 may be configured to be operable, particularly when the roof opening-closing button 12 accepts the opening manipulation for shifting the roof unit 4 from the closed state to the opened state, to restart the engine 2 or inhibit the idle-stop operation of the engine 2, and cause the roof actuator 10 to drive the roof unit 4.

FIG. 7 is a flowchart of a processing routine for causing the vehicle control system to control the engine 2 and the roof actuator 10, in the situation where the engine 2 is in the idle-stop state and the vehicle 1 is in the stopped state, and FIG. 8 is a flowchart of a processing routine for causing the vehicle control system to control the engine 2 and the roof actuator 10, in the situation where the engine 2 is in the operating state. That is, after the ignition switch of the vehicle 1 is turned on, and electric power is applied to the vehicle control system, the processing routine in FIG. 7 is repeatedly executed during the idle-stop state of the engine 2, and the processing routine in FIG. 8 is repeatedly executed during the operating state of the engine 2.

Here, steps S23 to 26 in FIG. 7 are the same as the steps S2 to S5 in FIG. 3, and steps S33 to 36 in FIG. 8 are the same as the steps S12 to S15 in FIG. 4. Thus, detailed description thereof will be omitted.

Firstly, as depicted in FIG. 7, upon start of the processing routine to control the roof actuator 10 and the engine 2 in the situation where the vehicle 1 is in the stopped state and the engine 2 is in the idle-stop state, in step S21, the control unit 25 operates to determine whether or not the roof unit 4 is in the closed state.

As a result, when the roof unit 4 is determined to be in the closed state, the processing routine proceeds to step S22 in which the control unit 25 operates to determine whether or not the roof opening-closing button 12 has accepted the opening manipulation for shifting the roof unit 4 from the closed state to the opened state.

As a result, when the roof opening-closing button 12 is determined to have accepted the opening manipulation for the roof unit 4, the processing routine proceeds to step S23 in which the control unit 25 operates to control the engine 2 such that the engine 2 being in the idle-stop state is restarted.

On the other hand, in the step S21, when the roof unit 4 is determined not to be in the closed state (determined to be in the opened state) or, in the step S22, when the roof opening-closing button 12 is determined not to have accepted the opening manipulation for the roof unit 4, the processing routine proceeds to step S25 in which the control unit 25 operates to determine whether or not the restart condition for restarting the engine 2 being in the idle-stop state has been satisfied.

Secondly, as depicted in FIG. 8, upon start of the processing routine to control the roof actuator 10 and the engine 2 in the situation where the engine 2 is in the operating state, in step S31, the control unit 25 operates to determine whether or not the roof unit 4 is in the closed state.

As a result, the roof unit 4 is determined to be in the closed state, the processing routine proceeds to step S32 in which the control unit 25 determines whether or not the vehicle speed is equal to or less than the first vehicle speed (e.g., 5 to 20 km/h) which is the upper limit of the vehicle speed range in which the opening-closing drive of the roof unit 4 is permitted, and the roof opening-closing button 12 has accepted the opening manipulation for shifting the roof unit 4 from the closed state to the opened state.

As a result, when it is determined that the vehicle speed is equal to or less than the first vehicle speed, and the roof opening-closing button 12 has accepted the opening manipulation for the roof unit 4, the processing routine proceeds to step S33 in which the control unit 25 operates to operate the roof actuator 10 such that the roof unit 4 is driven from the closed state to the opened state, according to the opening manipulation accepted by the roof opening-closing button 12 in the step S32.

On the other hand, in the step S31, when the roof unit 4 is determined not to be in the closed state (determined to be in the opened state), or, in the step S32, when it is determined that the vehicle speed is not equal to or less than the first vehicle speed (is greater than the first vehicle speed), or the roof opening-closing button 12 has not accepted the opening manipulation for the roof unit 4, the processing routine proceeds to step S35 in which the control unit 25 operates to determine whether or not the automatic idle-stop condition for automatically shifting the engine 2 being in the operating state to the idle-stop state has been satisfied.

Further, although the above embodiment has been described based on one example in which the roof unit 4 comprises the foldable roof 8, and the non-depicted link mechanism coupled to the rear part of the vehicle body and supporting the roof 8 in an unfoldable-foldable manner, the present invention can be applied to any type of roof unit such as a sliding sun roof or a convertible soft top, as long as it is selectively openable and closable.

Further, although the above embodiment has been described based on one example in which, in FIG. 3, after restarting the engine 2 in the step S2, the roof actuator 10 is operated in the step S3, the engine 2 may be restarted after starting the operation of the roof actuator 10.

Further, the above embodiment has been described based on one example in which, when the roof opening-closing button 12 accepts one of the opening and closing manipulations for the roof unit 4, in the situation where the engine 2 is in the idle-stop state and the vehicle 1 is in the stopped state, the control unit 25 operates to restart the engine 2 being in the idle-stop state, and operate the roof actuator 10. Alternatively, the control unit 25 may be configured to be operable, when the roof opening-closing button 12 accepts one of the opening and closing manipulations for the roof unit 4, in a situation where the engine 2 is in the idle-stop state, and the vehicle 1 is in a non-stopped state (i.e., vehicle speed > 0), to controllably restart the engine 2 and operate the roof actuator 10.

Further, the above embodiment has been described based on one example in which the determination as to whether or not the automatic idle-stop condition for automatically shifting the engine 2 to the idle-stop state has been satisfied is not performed during the period during which the roof actuator 10 drives the roof unit 4 after the roof opening-closing button 12 accepts one of the opening and closing manipulations in the situation where the engine 2 is in the operating state, so that the idle-stop operation of the engine 2 is inhibited. Alternatively, the control unit 25 may be configured to inhibit the idle-stop operation of the engine 2 in at least part of the period during which the roof actuator 10 drives the roof unit 4.

Further, the above embodiment has been described based on one example in which the determination as to whether or not the automatic idle-stop condition for automatically shifting the engine 2 to the idle-stop state has been satisfied is not performed during the period during which the roof actuator 10 drives the roof unit 4 after the roof opening-closing button 12 accepts one of the opening and closing manipulations in the situation where the engine 2 is in the operating state, so that the idle-stop operation of the engine 2 is inhibited. Alternatively, the idle-stop operation of the engine 2 may be inhibited by more strictly setting the automatic idle-stop condition, during the period during which the roof actuator 10 drives the roof unit 4 after the roof opening-closing button 12 accepts one of the opening and closing manipulations in the situation where the engine 2 is in the operating state. For example, in a case where the automatic idle-stop condition in a normal state is set such that: the upper limit of the vehicle speed is 5 km/h; the upper limit of the relative accelerator position is 3%; and the upper limit of the clutch stroke is 20%, the automatic idle-stop condition during the period during which the roof actuator 10 drives the roof unit 4 after the roof opening-closing button 12 accepts one of the opening and closing manipulations may be strictly set such that: the upper limit of the vehicle speed is 3 km/h; the upper limit of the relative accelerator position is 2%; and the upper limit of the clutch stroke is 10%.

Last of all, advantageous effects of the vehicle control systems according to the above embodiment and the modification of the above embodiment will be described.

Firstly, the control unit 25 is operable, when the roof opening-closing button 12 accepts the opening manipulation for shifting the roof unit 4 from the closed state to the opened state, in the situation where the roof unit 4 is in the closed state and the engine 2 is in the idle-stop state, to control the engine 2 such that the engine 2 being in the idle-stop state is restarted, and controls the roof actuator 10 such that the roof unit 4 being in the closed state is shifted to the opened state. Thus, when a driver performs the opening manipulation for the roof unit 4 in the situation where the engine 2 is in the idle-stop state, so as to enjoy exhilarating driving under the condition that the roof unit 4 is in the opened state, the engine 2 can be restarted in response to the opening manipulation, and then when, after the roof unit 4 is consequently set to the opened state, the driver depresses the accelerator pedal with intention of a rapid acceleration of the vehicle 1, the engine speed can be rapidly increased in response to the manipulation of the accelerator pedal by the driver. That is, it is possible to meet the expectation of the driver who intends a rapid acceleration of the vehicle 1.

Secondly, the control unit 25 is operable, when the roof opening-closing button 12 accepts the opening manipulation for shifting the roof unit 4 from the closed state to the opened state, in the situation where the roof unit 4 is in the closed state and the engine 2 is in the operating state, to control the roof actuator 10 such that the roof unit 4 being in the closed state is shifted to the opened state, and inhibit the idle-stop operation of the engine 2, during the period during which the roof actuator 10 drives the roof unit 4 toward the opened state after the roof opening-closing button 12 accepts the opening manipulation. Thus, when a driver performs the opening manipulation for the roof unit 4 in the situation where the engine 2 is in the operating state, so as to enjoy exhilarating driving under the condition that the roof unit 4 is in the opened state, the idle-stop operation can be inhibited to maintain the operating state of the engine 2, and then when, after the roof unit 4 is consequently set to the opened state, the driver depresses the accelerator pedal with intention of a rapid acceleration of the vehicle 1, the engine speed can be rapidly increased in response to the manipulation of the accelerator pedal by the driver. That is, it is possible to meet the expectation of the driver who intends a rapid acceleration of the vehicle.

### LIST OF REFERENCE SIGNS

- 1: vehicle
- 2: engine
- 4: roof unit
- 6: roof storage compartment
- 8: roof
- 10: roof actuator
- 12: roof opening-closing button
- 14: accelerator position sensor
- 16: brake depression amount sensor
- 18: vehicle speed sensor
- 20: clutch pedal sensor
- 22: gear sensor
- 24: air-conditioning switch
- 25: control unit
- 26: starter motor
- 28: fuel injector
- 30: spark plug
- 32: display device
- 34: air conditioner

## Claims

1. A vehicle control system for a vehicle equipped with: a roof unit configured to cover a top of a passenger compartment and to be selectively openable and closable; a driving device to perform opening-closing drive of the roof unit; and an engine capable of an idle-stop operation, the vehicle control system comprising:
an opening-closing manipulator provided inside the passenger compartment and configured to accept opening and closing manipulations for the roof unit; and
a controller configured to control the engine and the driving device,
wherein the controller is operable, when the opening-closing manipulator accepts the opening manipulation for shifting the roof unit from a closed state to an opened state, in a situation where the roof unit is in the closed state and the engine is in an idle-stop state, to control the engine such that the engine being in the idle-stop state is restarted, and control the driving device such that the roof unit being in the closed state is shifted to the opened state.

2. The vehicle control system according to claim 1, wherein the controller is operable, when the opening-closing manipulator accepts the opening manipulation, in a situation where the roof unit is in the closed state and the engine and the vehicle are in the idle-stop state and in a stopped state, respectively, to control the engine such that the engine being in the idle-stop state is restarted, and control the driving device such that the roof unit being in the closed state is shifted to the opened state.

3. The vehicle control system according to claim 1 or 2, wherein the controller is operable to control the driving device such that the drive of the roof unit is started after the restart of the engine.

4. A vehicle control system for a vehicle equipped with: a roof unit configured to cover a top of a passenger compartment and to be selectively openable and closable; a driving device to perform opening-closing drive of the roof unit; and an engine capable of an idle-stop operation, the vehicle control system comprising:
an opening-closing manipulator provided inside the passenger compartment and configured to accept opening and closing manipulations for the roof unit; and
a controller configured to control the engine and the driving device,
wherein the controller is operable, when the opening and closing manipulator accepts the opening manipulation for shifting the roof unit from a closed state to an opened state, in a situation where the roof unit is in the closed state and the engine is in an operating state, to control the driving device such that the roof unit being in the closed state is shifted to the opened state, and inhibit the idle-stop operation of the engine, during a period during which the driving device drives the roof unit toward the opened state after the opening-closing manipulator accepts the opening manipulation.

5. The vehicle control system according to claim 4, wherein the controller is operable, when a vehicle speed of the vehicle is equal to or less than a first vehicle speed, to permit the opening-closing drive of the roof unit by the driving device, and, when the vehicle speed is equal to or less than a second vehicle speed less than the first vehicle speed, to permit the idle-stop operation of the engine.

6. The vehicle control system according to claim 4 or 5, wherein a drive time period required for the driving device to shift the roof unit from the closed state to the opened state is greater than a time period required for shifting the engine being in the operating state to the idle-stop state.
